# EUROPEAN PATENT SPECIFICATION

(11) **EP 4 420 448 B1**
(45) Date of publication and mention of the grant of the patent: **07.10.2026**
(21) Application number: 22884161.5
(22) Date of filing: 19.10.2022
(51) Int. Cl.: H04W 72/02, H04W 24/10, H04W 72/54, H04W 76/14, H04W 76/15, H04W 92/18, H04W 72/25, H04W 76/11

(54) **METHOD FOR HANDLING SIDELINK COMMUNICATION BETWEEN USER EQUIPMENTS USING QUALITY INDICATIONS OF SIDELINK CARRIERS**
VERFAHREN ZUR HANDHABUNG VON SIDELINK-KOMMUNIKATION ZWISCHEN BENUTZERGERÄTEN UNTER VERWENDUNG VON QUALITÄTSANZEIGEN VON SIDELINK-TRÄGERN
PROCÉDÉ POUR GÉRER UNE COMMUNICATION DE LIAISON LATÉRALE ENTRE DES ÉQUIPEMENTS UTILISATEUR À L'AIDE D'INDICATIONS DE QUALITÉ DE SUPPORTS DE LIAISON LATÉRALE

(30) Priority: 20.10.2021 US 202163262753 P
(43) Date of publication of application: 28.08.2024
(73) Proprietor: Telefonaktiebolaget LM Ericsson (publ), 164 83 Stockholm (SE)
(72) Inventor: WANG, Min, 977 53 LULEÅ (SE)
(74) Representative: Ericsson
(86) International application number: PCT/SE2022/050948
(87) International publication number: WO 2023/068993

(56) References cited:
- WO-A1-2019/022504
- WO-A1-2021/140494
- US-A1- 2021 136 646
- US-A1- 2021 144 681
- ZTE, SANECHIPS: "Discussion on CSI and RSRP report", 3GPP DRAFT; R2-1914537, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20191118 - 20191122, 8 November 2019 (2019-11-08), Mobile Competence Centre ; 650, route des Lucioles ; F-06921 Sophia-Antipolis Cedex ; France , XP051816603
- INTERDIGITAL INC.: "Remaining Aspects of CSI Reporting for NR V2X", 3GPP DRAFT; R2-2000547, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. 20200224 - 20200306, 14 February 2020 (2020-02-14), Mobile Competence Centre ; 650, route des Lucioles ; F-06921 Sophia-Antipolis Cedex ; France , XP051849127

## Description

### TECHNICAL FIELD

Embodiments herein relate to a first user equipment (UE), a second UE and methods performed therein regarding wireless communication. Furthermore, a computer program product and a computer-readable storage medium are also provided herein. Especially, embodiments herein relate to handling or enabling communication, e.g. handling sidelink (SL) communication between UEs, in a wireless communication network.

### BACKGROUND

In a typical wireless communication network, UEs, also known as wireless communication devices, mobile stations, stations (STA) and/or wireless devices, communicate via a Radio Access Network (RAN) to one or more core networks (CN). The RAN covers a geographical area which is divided into service areas or cell areas, with each service area or cell area being served by a radio network node such as an access node e.g. a Wi-Fi access point or a radio base station (RBS), which in some radio access technologies (RAT) may also be called, for example, a NodeB, an evolved NodeB (eNodeB) and a gNodeB (gNB). The service area or cell area is a geographical area where radio coverage is provided by a radio network node. The radio network node operates on radio frequencies to communicate over an air interface with the wireless devices within range of the access node. The radio network node communicates over a downlink (DL) to the wireless device and the wireless device communicates over an uplink (UL) to the access node.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with user equipments. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more CNs.

Specifications for the Evolved Packet System (EPS) have been completed within the 3^{rd} Generation Partnership Project (3GPP) and this work continues in the coming 3GPP releases, such as fifth generation (5G) and sixth generation (6G) networks. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the RAN of an EPS has an essentially "flat" architecture comprising radio network nodes connected directly to one or more CNs.

With the emerging 5G technologies also known as new radio (NR), the use of very many transmit- and receive-antenna elements may utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

SL transmissions are direct communications between two UEs without signal relay through a base station. SL transmissions over NR are specified for release (Rel.)-16 allowing direct communication between two UEs without going through a base station. The NR SL is an evolution of the LTE SL, in particular of the features introduced in release (Rel)-14 and Rel-15 for vehicle to everything (V2X) communication. Some of the most relevant features of the NR SL are the following:
- Support for unicast and groupcast transmissions, in addition to broadcast transmissions, which were already supported in LTE.
- Support for hybrid automatic repeat request (HARQ) feedback over the SL for unicast and groupcast. This feedback is conveyed by the receiver UE to the transmitter UE using the physical sidelink feedback channel (PSFCH). This functionality is new in NR compared to LTE.
- To alleviate resource collisions among different SL transmissions launched by different UEs, it enhances channel sensing and resource selection procedures, which also lead to a new design of physical channels carrying sidelink control information (SCI). The new design of the SCI simplifies coexistence between releases by grouping together all the information related to resource allocation, which is critical for coexistence, in a single channel with a robust, predefined format. Other control information is carried by other means, in a more flexible manner.
- Grant-free transmissions, which are supported in NR uplink transmissions, are also provided in NR SL transmissions, to improve the latency performance.
- To achieve a high connection density, congestion control and thus the quality of service (QoS) management is supported in NR SL transmissions.

### NR SL physical channels

In NR SL, the following physical layer (PHY) channels are defined:
- Physical Sidelink Common Control Channel (PSCCH): This channel carries SCI including part of the scheduling assignment (SA) that allows a receiver to further process and decode the corresponding Physical Sidelink Shared Channel (PSSCH), e.g., demodulation reference signal (DMRS) pattern and antenna port, modulation and coding scheme (MCS), etc. In addition, the PSCCH indicates future reserved resources. This allows a receiver (RX) to sense and predict the utilization of the channel in the future. This sensing information is used for the purpose of UE-autonomous resource allocation, Mode 2, which is described below.
- PSSCH: The PSSCH is transmitted by a SL transmitter UE, which conveys SL transmission data, i.e., the SL shared channel SL-SCH, and a part of the SCI. In addition, higher layer control information may be carried using the PSSCH, e.g., medium access control (MAC) control elements (CE), radio resource control (RRC) signaling, etc. For example, channel state information (CSI) is carried in the MAC CE over the PSSCH instead of the PSFCH.
- PSFCH: The PSFCH is transmitted by a SL receiver UE for unicast and groupcast. It conveys the SL HARQ acknowledgement, which may consist of acknowledgement (ACK) and/or negative acknowledgement (NACK), used for unicast and groupcast option 2, or NACK-only, used for groupcast option 1.
- Physical Sidelink Broadcast Channel (PSBCH): The PSBCH conveys information related to synchronization, such as the direct frame number (DFN), indication of the slot and symbol level time resources for SL transmissions, in-coverage indicator, etc. The synchronization signal block (SSB) is transmitted periodically at every 160 ms. The PSBCH is transmitted along with the sidelink primary synchronization signal (S-PSS) or sidelink secondary synchronization signal (S-SSS) as a sidelink synchronization signal block (S-SSB).
   ∘ S-PSS/S-SSS are used by UEs to establish a common timing reference among UEs in the absence of another reference such as global navigation satellite system (GNSS) time of network (NW) time.

Along with the different physical channels, reference signals (RS) are transmitted for different purposes, including demodulation (DM-RS), phase tracking RS (PT-RS), or RS for channel state information acquisition such as channel state information reference signal (CSI-RS).

Another new feature is the two-stage SCI. This a version of a downlink control information (DCI) for SL. A first part, such as a first stage, of the SCI is sent on the PSCCH. This part is used for channel sensing purposes, including the reserved time-frequency resources for transmissions, DMRS pattern and antenna port, etc., and can be read by all UEs while the remaining part, such as a second stage, of the SCI carries the remaining scheduling and control information such as a 8-bits source identity (ID) and a 16-bits destination ID, New Data Indicator (NDI), redundancy version (RV) and HARQ process ID, is sent on the PSSCH to be decoded by the receiver UE.

NR SL supports the following two modes of resource allocation:
- Mode 1: SL resources are scheduled by a gNB.
- Mode 2: The UE autonomously selects SL resources from a (pre-)configured SL resource pool(s). To avoid collisions between UEs a procedure based on the channel sensing and resource reservation is used.

An in-coverage UE may be configured by a gNB to use Mode 1 or Mode 2. For the out-of-coverage UEs, only Mode 2 may be used.

Like in LTE, scheduling over the SL in NR is performed in different ways for Mode 1 and Mode 2.

In Mode 1, the grant is provided by the gNB. The following two kinds of grants are supported:
Dynamic grants are provided for one or multiple transmissions of a single packet, i.e., transport block (TB). When the traffic to be sent over SL arrives at a transmitter UE, i.e., at the corresponding transmitter (TX) buffer, the UE initiates a four-message exchange procedure to request SL resources from a gNB; scheduling request (SR) on UL, grant, buffer status report (BSR) on UL, and grant for data on SL sent to UE. A gNB indicates the resource allocation for the PSCCH and the PSSCH in the DCI conveyed by PDCCH with cyclic redundancy check (CRC) scrambled with the SL radio network temporary identifier (SL-RNTI) of the corresponding UE. A UE receiving such a DCI, assumes that it has been provided a SL dynamic grant only if the detects that the CRC of DCI has been scrambled with its SL-RNTI. The transmitter UE then indicates the time-frequency resources and the transmission scheme of the allocated PSSCH in the PSCCH and launches the PSCCH and the PSSCH on the allocated resources for SL transmissions. When a grant is obtained from the gNB, the transmitter UE can only transmit a single TB. As a result, this kind of grant is suitable for traffic with a loose latency requirement.

Configured grant: For the traffic with a strict latency requirement, performing the four-message exchange procedure to request SL resources may induce unacceptable latency. In this case, prior to the traffic arrival, the transmitter UE may perform the four-message exchange procedure and request a set of resources. If a grant can be obtained from the gNB, then the requested resources are reserved in a periodic manner. Upon traffic arriving at the transmitter UE, this UE can launch the PSCCH and the PSSCH on the upcoming resource occasion. In fact, this kind of grant is also known as grant-free transmissions.

Note that only the transmitter UE is scheduled by the gNB. The receiver UE does not receive any information directly from the gNB. Instead, it is scheduled by the transmitter UE by means of the SCI. Therefore, a receiver UE should perform blind decoding to identify the presence of PSCCH and find the resources for the PSSCH through the SCI.

In Mode 2 resource allocation, the grant is generated by the UE itself. When traffic arrives at a transmitter UE, i.e., at the corresponding TX buffer, this transmitter autonomously selects resources for the PSCCH and the PSSCH. To further enhance the probability of successful TB decoding at one shot and thus suppress the probability to perform retransmissions, a transmitter UE may repeat the TB transmission along with the initial TB transmission. These retransmissions may be triggered by the corresponding SL HARQ feedback or may be sent blindly by the transmitter UE. In either case, to minimize the probability of collision for potential retransmissions, the transmitter UE may also reserve the corresponding resources for PSCCH/PSSCH for retransmissions. That is, the transmitter UE selects resources for:
1) The PSCCH/PSSCH corresponding to the first transmission.
2) The PSCCH/PSCCH corresponding to the retransmissions. Resources for up to 2 retransmissions may be reserved. These reserved resources are always used in case of blind retransmissions. If SL HARQ feedback is used, the usage of the reserved resources is conditional on a negative SL HARQ acknowledgement.

Since each transmitter UE in SL transmissions should autonomously select resources for its own transmissions, preventing the different transmitter UEs from selecting the same resources turns out to be a critical issue in Mode 2. A particular resource selection procedure is therefore imposed to Mode 2 based on channel sensing. The channel sensing algorithm involves detecting the reservations transmitted by other UEs and performing power measurements, i.e., reference signal received power (RSRP), on the incoming transmissions.

### SL CSI Reporting MAC CE.

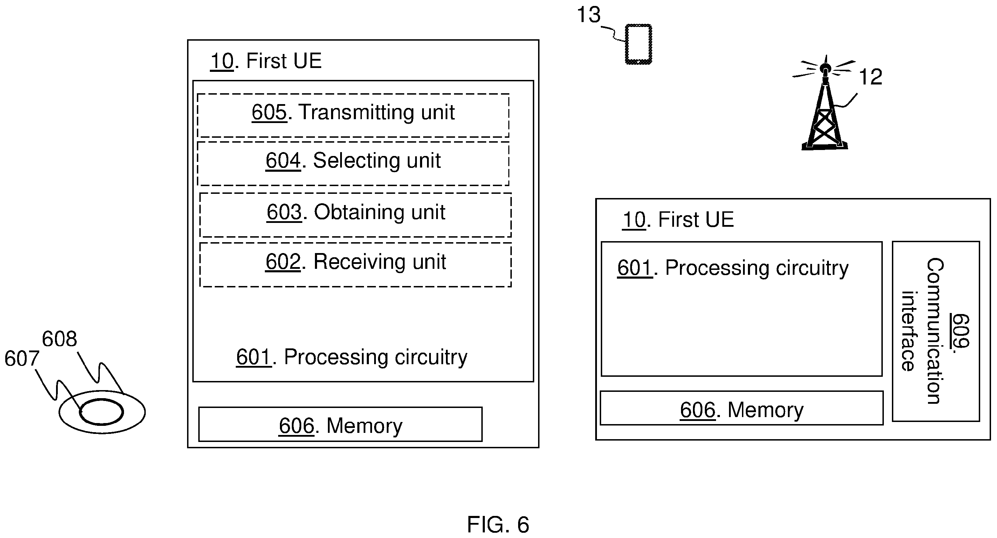

As specified in clause 6.1.3.35 of TS 38.321 V 16.6.0, The SL CSI Reporting MAC CE is identified by a MAC subheader with logical channel Identity (LCID) as specified in Table 6.2.4-1. The priority of the SL CSI Reporting MAC CE is fixed to '1'. The SL CSI Reporting MAC CE is defined as follows (Figure 6.1.3.35-1):
- rank indicator (RI): This field indicates the derived value of the Rank Indicator for SL CSI reporting as specified in clause 8.5 of TS 38.214. The length of the field is 1 bit;
- channel quality indicator (CQI): This field indicates the derived value of the Channel Quality Indicator for SL CSI reporting as specified in clause 8.5 of TS 38.214 v.16.0.0 The length of the field is 4 bit;
- R: Reserved bit, set to 0.

### SUMMARY

As part of developing embodiments herein, one or more problems were first identified for the above actions:
In 3GPP, carrier aggregation (CA) is being proposed by companies for ReL-18 SL topics. It is most likely to be agreed by 3GPP as one Rel-18 topic. In previous releases, carrier aggregation has been introduced for LTE SL. However, at that time, it was only SL groupcast and SL broadcast supported for SL carrier aggregation. In other words, SL unicast was not supported yet. For NR SL, SL unicast has been introduced since 3GPP Rel-16. Therefore, NR SL CA would be very different from the existing LTE SL CA. In other words, LTE SL CA cannot be directly reused for NR SL CA and some necessary changes may be needed to be studied carefully considering how to support SL unicast in case of CA. Among all the issues, there is one issue concerning CSI report MAC CE. CSI report MAC CE was designed in NR Rel-16 to enable a SL UE to provide CSI reporting to its peer SL UE which has SL unicast connection to the SL UE. In case of CA, a UE would be configured with multiple SL carriers with another peer UE. In this case, the existing CSI report MAC CE designed for SL unicast would not work.

Therefore, it is necessary to study how to enhance the SL message such as a SL report MAC CE to make it work for multiple SLs as in CA. WO2021140494 shows UE reporting SL-CSI values.

An object of embodiments herein is, thus, to provide a mechanism that improves the performance using multiple SLs in the wireless communication network. This is achieved as claimed in claims 1,5, 10 and 12.

According to an aspect, the object is achieved by providing a method performed by a first UE, such as a device to device UE, for handling communication over a SL in a wireless communication network. The first UE transmits to a second UE, a message comprising a quality indication of a respective SL carrier of one or more SL carriers out of two or more configured SL carriers, wherein the message further comprises a respective identifier of the one or more SL carriers of which quality indication is included in the message. Thus, the message may comprise an identifier for each SL carrier also referred to as carrier identifier and an associated quality indication.

According to another aspect, the object is achieved by providing a method performed by a second UE, such as a device to device UE, for handling communication over a SL in a wireless communication network. The second UE receives from a first UE, a message comprising a quality indication of a respective SL carrier of one or more SL carriers out of two or more configured SL carriers, wherein the message further comprises a respective identifier of the one or more SL carriers of which quality indication is included in the message. Thus, the message may comprise an identifier for each SL carrier also referred to as carrier identifier and an associated quality indication.

According to still another aspect, the object is achieved by providing a first UE, and a second UE configured to perform the methods herein, respectively.

According to yet another aspect, the object is achieved by providing a first UE, such as a device to device UE, for handling communication over a SL in a wireless communication network. The first UE is configured to transmit to a second UE, a message comprising a quality indication of a respective SL carrier of one or more SL carriers out of two or more configured SL carriers, wherein the message further comprises a respective identifier of the one or more SL carriers of which quality indication is included in the message.

According to yet still another aspect, the object is achieved by providing a second UE, such as a device to device UE, for handling communication over a SL in a wireless communication network. The second UE is configured to receive from a first UE, a message comprising a quality indication of a respective SL carrier of one or more SL carriers out of two or more configured SL carriers, wherein the message further comprises a respective identifier of the one or more SL carriers of which quality indication is included in the message.

It is furthermore provided herein a computer program product comprising instructions, which, when executed on at least one processor, cause the at least one processor to carry out any of the methods herein, as performed by the first UE or the second UE, respectively. It is additionally provided herein a computer-readable storage medium, having stored thereon a computer program product comprising instructions which, when executed on at least one processor, cause the at least one processor to carry out any of the methods herein, as performed by the first UE or the second UE, respectively.

Thus, embodiments herein disclose a design of the message such as a multiple entry CSI reporting MAC CE. The MAC CE may contain at least one of the following information
- identifiers of one or multiple SL carriers of which CSI is or are included in the MAC CE
   ∘ For example, a bitmap field containing multiple bits may be defined in the MAC CE. Each bit represents a specific SL carrier. The bit with the value '1' indicates that CSI information of the associated SL carrier is present in the MAC CE, while, the bit with the value '0' indicates that CSI information of the associated SL carrier is absent in the MAC CE.
- For each of one or multiple SL carriers, at least one of the following information elements, as specified in clause 5.2.1 of TS 38.214 V 16.7.0, may be carried
   ∘ Channel Quality Information (CQI)
   ∘ Precoding Matrix Indicator (PMI)
   ∘ CSI-RS Resource Indicator (CRI)
   ∘ SS/PBCH Resource Block Indicator (SSBRI)
   ∘ Layer Indicator (LI)
   ∘ Rank Indicator (RI)
   ∘ L1-reference signal received power (RSRP)
   ∘ L1-signal to interference plus noise ratio (SINR)

Using this MAC CE, the first UE may report the quality indication such as CSI information of one or multiple SL carriers to the second UE for example in case of SL CA. When a CSI reporting MAC CE is triggered or requested, the first UE may select the most suitable SL carrier, for example, highest signal quality, among all SL carriers and transmits the MAC CE on that selected SL carrier to the second UE.

Using the proposed MAC CE, embodiments herein are able to achieve one or more of the following benefits:
- It is feasible to enable CSI information exchange between a UE pair in case of multiple SLs such as in a CA scenario.
- The UE is able to select a most suitable SL carrier to transmit the message, this can improve transmission reliability for CSI reporting.

Thus, embodiments herein are handling communication in a resource efficient manner resulting in an improved performance of the wireless communication network.

### BRIEF DESCRIPTION OF THE DRAWINGS

Embodiments will now be described in more detail in relation to the enclosed drawings, in which:

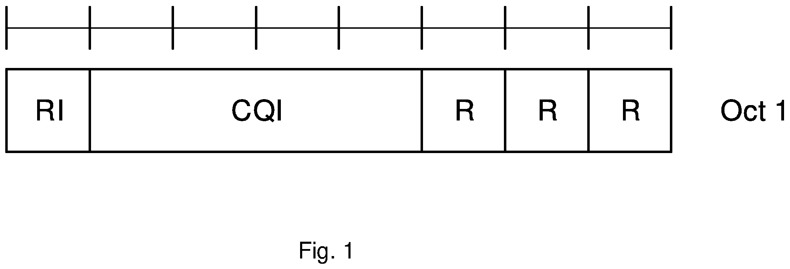

- Fig. 1: shows SL CSI Reporting MAC CE of TS 38.321 V 16.6.0 according to prior art;
- Fig. 2: is a schematic overview depicting a wireless communication network according to embodiments herein;
- Fig. 3: is a combined signalling scheme and flowchart according to embodiments herein;
- Fig. 4: is a flowchart depicting a method in a first UE according to embodiments herein;
- Fig. 5: is a flowchart depicting a method in a second UE according to embodiments herein;
- Fig. 6: is a block diagram depicting a first UE according to embodiments herein;
- Fig. 7: is a block diagram depicting a second UE according to embodiments herein;
- Fig. 8: schematically illustrates a telecommunication network connected via an intermediate network to a host computer;
- Fig. 9: is a generalized block diagram of a host computer communicating via a base station with a user equipment over a partially wireless connection; and
- Figs. 10, 11, 12, and 13: are flowcharts illustrating methods implemented in a communication system including a host computer, a base station and a user equipment.

### DETAILED DESCRIPTION

Embodiments herein are described within the context of **3GPP NR** radio technology (3GPP TS 38.300 V15.2.0 (2018-06)). It is understood that the problems and solutions described herein are equally applicable to wireless access networks and UEs implementing other access technologies and standards. NR is used as an example technology where embodiments are suitable, and using NR in the description therefore is particularly useful for understanding the problem and solutions solving the problem. In particular, embodiments are applicable also to 3GPP LTE, or 3GPP LTE and NR integration, also denoted as non-standalone NR.

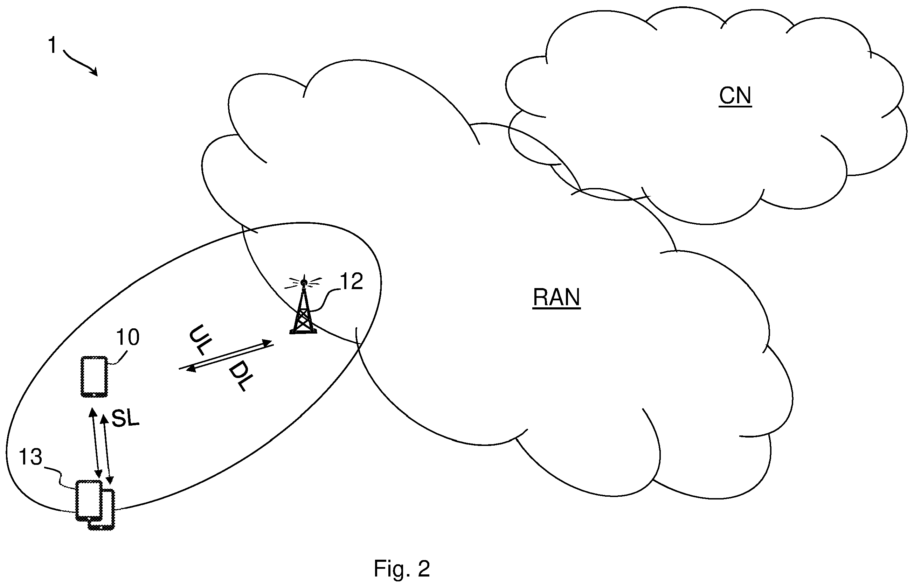

Embodiments herein relate to wireless communication networks in general. **Fig. 2** is a schematic overview depicting **a wireless communication network 1.** The wireless communication network 1 comprises one or more RANs and one or more CNs. The wireless communication network 1 may use one or a number of different technologies, such as Wi-Fi, LTE, LTE-Advanced, 5G, WCDMA, Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

In the wireless communication network 1, wireless devices e.g. **a first UE 10** also denoted as a transmitter **UE 10** or just the UE, such as a mobile station, a non-access point (non-AP) STA, a STA, a user equipment and/or a wireless terminal, communicate via one or more Access Networks (AN), e.g. RAN, to one or more CN. It should be understood by the skilled in the art that "UE" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a small base station capable of communicating using radio communication with a network node within an area served by the network node.

The wireless communication network 1 comprises **a radio network node 12** providing radio coverage over a geographical area, **a first service area 11,** of a radio access technology (RAT), such as LTE, Wi-Fi, WiMAX or similar. The radio network node 12 may be a transmission and reception point e.g. a radio network node such as a Wireless Local Area Network (WLAN) access point or an Access Point Station (AP STA), an access node, an access controller, a base station, e.g. a radio base station such as a NodeB, an evolved Node B (eNB, eNode B), a gNodeB (gNB), a base transceiver station, a radio remote unit, an Access Point Base Station, a base station router, a transmission arrangement of a radio base station, a stand-alone access point or any other network unit or node capable of communicating with a UE within the area served by the radio network node 12 depending e.g. on the radio access technology and terminology used. The radio network node 12 may alternatively or additionally be a controller node or a packet processing node such as a radio controller node or similar. It should be noted that a service area may be denoted as cell, beam, beam group, or similar, to define an area of radio coverage.

The radio network node 12 may be referred to as a serving network node wherein the first service area may be referred to as a serving cell or primary cell, and the serving network node communicates with the UEs in form of DL transmissions to the UEs and UL transmissions from the UEs. The wireless communication network 1 further comprises **one or more second UEs 13,** also referred to as a requesting, receiving or receiver UE, communicating with the radio network node and the first UE 10. The first UE 10 may be referred to as transmitting or transmitter UE 10. The UEs are be configured with multiple SL carriers between one another or other UEs.

Embodiments herein relate to communication over a path between the first and second UE, 10 and 13 respectively, using resources, also denoted as a SL. The embodiments are described in the context of NR, i.e., the UEs are deployed in a same or different NR cells. The embodiments are also applicable to other scenarios including UE to network relay or UE to UE relay where the link between the first UE 10 and second UE 13 may be based on, e.g., LTE SL or NR SL. The connection between the first UE 10 and the second UE 13 is also not limited to a LTE/NR SL, and a SL using any short-range communication technology such as Wi-Fi is equally applicable. In the below embodiments, any grant issued by the radio network node 12 is for a SL transmission between two UEs.

According to embodiments herein multiple SL carriers may be configured between the first UE 10 and the second UE 13. The first UE 10 transmits a message, to a peer UE, such as the second UE 13, comprising one or more identifiers of one or multiple SL carriers of which one or more indications of quality, such as CSls, are included in the message.

Embodiments herein relate to the message such as a MAC CE defined for a UE to report SL CSI to a peer UE in case of there are multiple SL carriers configured between the UE and its peer UE. The MAC CE may be named as for example "Multiple Entry Sidelink CSI Reporting MAC CE" or "Sidelink Multiple Entry CSI Reporting MAC CE". The MAC CE is not limited to these names. Any other name may be also applicable to the MAC CE. The MAC CE may contain at least one of the following information:
- identifiers of one or multiple SL carriers of which CSI are included in the MAC CE
   ∘ The identifiers may comprise a bitmap field containing multiple bits that may be defined in the MAC CE. Each bit represents a specific SL carrier. The bit with the value '1' indicates that CSI information of the associated SL carrier is present in the MAC CE, while, the bit with the value '0' indicates that CSI information of the associated SL carrier is absent in the MAC CE.
- For each of one or multiple SL carriers, quality indication is carried, and may comprise at least one of the following information elements, as specified in clause 5.2.1 of TS 38.214 V 16.7.0,
   ∘ CQI
   ∘ PMI
   ∘ CRI
   ∘ SSBRI
   ∘ Layer Indicator (LI)
   ∘ RI
   ∘ L1-RSRP
   ∘ L1-SINR

Note that, in a general scenario, the term "radio network node" can be substituted with "transmission point". Distinction between the transmission points (TPs) may typically be based on cell reference signals (CRS) or different synchronization signals transmitted. Several TPs may be logically connected to the same radio network node, but, if they are geographically separated or are pointing in different propagation directions, the TPs may be subject to the same mobility issues as different radio network nodes. In subsequent sections, the terms "radio network node" and "TP" can be thought of as interchangeable.

The embodiments are described in the context of NR, i.e., the first UE 10 performs NR SL transmission to the second UE 13. The embodiments are also applicable to UEs performing for example LTE SL transmissions.

Embodiments herein enable one or more of the following advantages: Using the proposed MAC CE, embodiments herein are able to achieve one or more of the following benefits
- It is feasible to enable CSI information exchange between a UE pair in case of CA;
- The first UE 10 may be able to select a most suitable SL carrier to transmit a CSI reporting MAC CE, this can improve transmission reliability for CSI reporting.

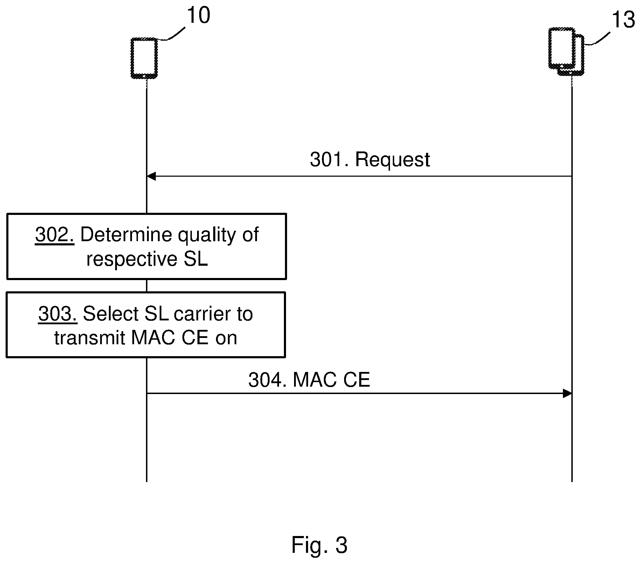

**Fig. 3** is a combined flowchart and signalling scheme according to embodiments herein. The actions may be performed in any suitable order.

**Action 301.** The second UE 13 may request an indication of the quality such as a CSI report from the first UE 10. The second UE 13 sends a request message to the first UE 10 for requesting CSI. The request message carries one or more identifiers of one or multiple SL carriers for which the CSI information are requested. Alternatively, a bitmap field containing multiple bits may be defined in the MAC CE. Each bit represents a specific SL carrier. The bit with the value '1' indicates that CSI information of the associated SL carrier is requested, while, the bit with the value '0' indicates that CSI information of the associated SL carrier is not requested.

Furthermore, the second UE 13 may provide a latency bound of the requested CSI report. Within this latency bound, the first UE 10 needs to provide the CSI report to the second UE 13. There may be separate CSI report latency bound for each SL carrier respectively.

**Action 302.** The first UE 10 may obtain or determine quality information of one or more multiple SLs, for example, for CA communication.

**Action 303.** As soon as the first UE 10 has triggered a CSI reporting MAC CE, either the existing SL CSI Reporting MAC CE or the new SL Multiple Entry CSI Reporting MAC CE, in case the first UE 10 is configured with multiple SL carriers towards the second UE 13, when obtaining a SL grant, the first UE 10 may apply one of the following options to select a SL carrier to transmit the MAC CE to the second UE 13. MAC CE may be the message comprising one or more identifiers of one or multiple SL carriers of which one or more indications of quality, such as CSIs, are included in the message.

**Option 1:** the SL carrier via which the first UE 10 may send a CSI reporting MAC CE is configured to the first UE 10 by the radio network node 12 via dedicated RRC signaling or DCI. In an example, the radio network node 12 signals the first UE 10 of the SL carrier in the same DCI carrying the SL grant.

**Option 2:** the first UE 10 may select the SL carrier with a lowest congestion among all SL carriers. The congestion may be measured in terms of metrics including such as channel busy ratio, channel usage ratio, received signal strength indicator (RSSI), etc. For each SL carrier, the measured channel busy ratio (CBR) or channel occupancy ratio (CR) of the resource pools associated with the SL carrier may be used to indicate congestion situation of the SL carrier.

**Option 3:** the first UE 10 may select a SL carrier with a strongest radio channel quality among all SL carriers in terms of metrics such as Reference Signal Received Quality (RSRQ), RSRP, SINR, signal to interference ratio (SIR) etc.

**Option 4:** the first UE 10 may select a specific SL carrier considering other conditions such as:
- The SL carrier with lowest index among all SL carriers.
- The SL carrier with highest index among all SL carriers.
- The first UE 10 may select the SL carrier in a round robin fashion. In an example, last time, the first UE 10 may select the SL carrier 0 to transmit a CSI reporting MAC CE. Next time, the first UE 10 may select the SL carrier 1 to transmit another CSI reporting MAC CE, and so on.

**Option 5:** the first UE 10 may select a SL carrier among all SL carriers randomly.

**Action 304.** The first UE 10 transmits, to the second UE 13, a message, such as a MAC CE or a message comprising the MAC CE, comprising a quality indication of a respective SL carrier of one or more (or at least two) SL carriers, wherein the message further comprises respective identifiers of the one or more (or at least two) SL carriers of which quality indications are included in the message. Thus, the message may comprise an identifier for one or more SL carriers, such as an identifier for each SL carrier.

The identifier may be added into an existing SL CSI reporting MAC CE for indicating the associated SL carrier. The identifier may be added via one of the following options:
Option 1: the identifier may be carried via one or more existing R bits. In the existing MAC CE, there are 3 R bits. So, the part or the full part of all R bits may be reused for indicating the identifier. Alternatively, a new field for indicating the identifier of the SL carrier may be added into the MAC CE.
Option 2: the identifier may be indicated using one or more fields in the MAC subheader for the MAC CE. Any field in the MAC subheader may be repurposed to indicate the identifier. Alternatively, a new field for indicating the identifier of the SL carrier may be added into the MAC subheader.

In this way, the first UE 10 may send a CSI reporting MAC CE for a SL carrier to a peer UE such as the second UE 13 using any SL activated carrier between the first UE 10 and the second UE 13. Upon reception of the MAC CE, the second UE 13 may identify the SL carrier which is associated with the CSI reporting MAC CE.

Thus, upon reception of the request message, the first UE 10 may send the message to the second UE 13. This may be performed within the signalled latency bound. The first UE 10 may also be configured with a different CSI latency bound for a SL carrier. In this case, the first UE 10 may apply the minimum value between the configured different CSI latency bound and the received latency bound in the request message for the SL carrier. For example, wherein the first UE 10 is a peer UE: Upon reception of the request message, the peer UE may send the CSI report to the requesting UE within the signaled latency bound. The peer UE may also be configured with a different CSI latency bound for a SL carrier. In this case, the peer UE may apply the minimum value between the configured different CSI latency bound and the received latency bound in the request message for the SL carrier. Alternatively, there is no latency bound in the request message. Instead, the peer UE may be configured with a CSI latency bound which is applicable to any CSI report towards the second UE 13.

As an additional embodiment, a new LCID may be carried and defined for indicating that the MAC CE is for SL Multiple Entry CSI Reporting. An example of the new LCID is illustrated in the below table.
• Table 1/Updated Table 6.2.4-1 Values of LCID for SL-SCH of TS 38.321 V 16.6.0

| Index | LCID values |
|---|---|
| 0 | SCCH carrying PC5-S messages that are not protected |
| 1 | SCCH carrying PC5-S messages "Direct Security Mode Command" and "Direct Security Mode Complete" |
| 2 | SCCH carrying other PC5-S messages that are protected |
| 3 | SCCH carrying PC5-RRC messages |
| 4-19 | Identity of the logical channel |
| 20-60 | Reserved |
| 62 | Sidelink CSI Reporting |
| 63 | Padding |
| 64 | Sidelink Multiple Entry CSI Reporting |

As an additional embodiment, the new MAC CE has the same priority order as the existing SL CSI Reporting MAC CE.

An example of the priority order for the new MAC CE is illustrated as the below. Logical channels shall be prioritized in accordance with the following order, highest priority listed first:
- data from SCCH;
- SL CSI Reporting MAC CE or SL Multiple Entry CSI Reporting MAC CE;
- data from any sidelink traffic channel (STCH).

The CSI reporting MAC CE may be triggered for a MAC entity of the first UE 10 if any of the following events occur:
- a prohibit timer expires or has expired and at least one of the CSI information element has changed more than a threshold for at least one activated SL carrier since the last transmission of a CSI reporting MAC CE in the MAC entity (optionally when the MAC entity has SL resources for new transmission);
- a periodic timer expires;
- upon configuration or reconfiguration of the CSI reporting functionality by upper layers or gNB, which is not used to disable the function;
- activation of an SL carrier for the MAC entity;
- addition of the primary SL carrier, i.e. the primary SL carrier is newly added or changed;
- Upon reception of a signaling such as the request from the second UE 13 requesting CSI reporting MAC CE for at least one activated SL carrier.

When at least one of the above events occurs, the first UE 10 may send a CSI report to the second UE 13.

The MAC CEs for CSI reporting, either the existing SL CSI Reporting MAC CE or the new SL Multiple Entry CSI Reporting MAC CE, may be allowed to be transmitted alone using a grant without any data from any logical channel (LCH). In one case, there is not any data available from any LCH. In another case, there is data in some LCHs, however, due to that those LCHs does not match logical channel prioritization (LCP) restrictions associated with the grant so that they are not allowed to transmit together with the MAC CE using the grant.

A retransmission timer may be defined for the MAC CEs for CSI reporting, either the existing SL CSI Reporting MAC CE or the new SL Multiple Entry CSI Reporting MAC CE. The timer may be configured per PC5-RRC connection or per SL carrier. The retransmission timer may be started/restarted immediately after every transmission of the MAC CE. The retransmission timer may be stopped upon reception of a signalling from the second UE 13 indicating that the second UE 13 has responded to reception of the MAC CE. As another option, the retransmission timer may be stopped upon reception of a HARQ ACK indicating the receiving second UE 13 has received the TB carrying the MAC CE successfully. As yet another option, the retransmission timer may be stopped after transmission of the TB carrying the MAC CE. The same MAC CE may be triggered again upon expiry of the retransmission timer.

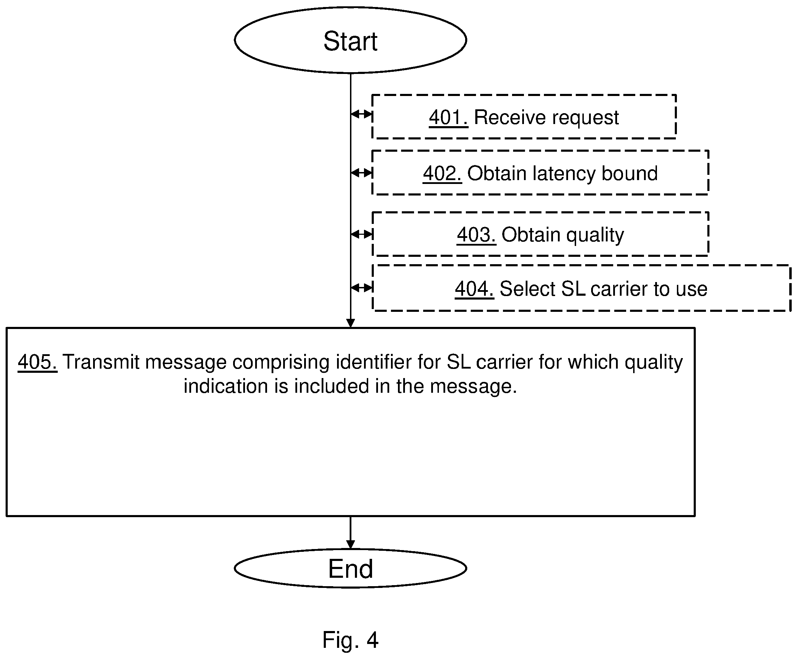

The method actions performed by the first UE 10 for handling communication over the SL in the wireless communication network 1 according to embodiments herein will now be described with reference to a flowchart depicted in **Fig. 4****.** The actions do not have to be taken in the order stated below, but may be taken in any suitable order. Actions performed in some embodiments are marked with dashed boxes.

**Action 401.** The first UE 10 may receive the request from the second UE 13 requesting one or more indications of the quality such as the CSI report of different SL carriers. Furthermore, the second UE 13 or the radio network node 12 may provide a latency bound of the requested CSI report. The second UE 13 may thus send a request message to the first UE 10 for requesting CSI for respective SL. The request message may carry at least one of the following information: identifier(s) of one or multiple SL carriers for which the CSI information are requested. Alternatively, a bitmap field containing multiple bits may be defined in the MAC CE. Each bit represents a specific SL carrier for which quality indication is requested.

**Action 402.** The first UE 10 may obtain a latency bound of the requested one or more indications.

**Action 403.** The first UE 10 may obtain quality information of multiple SLs. For example, the first UE 10 may measure quality or receive CSI reports comprising values indicating quality of the separate SL carriers.

**Action 404.** The first UE 10 may then select a SL carrier to transmit the message, such as a MAC CE or a CSI reporting message. In case the UE 10 is configured with multiple SL carriers towards the second UE 13, when obtaining a SL grant, the first UE 10 may apply one of the following options to select a SL carrier to transmit the MAC CE to the second UE 13.**Option 1:** the SL carrier via which the first UE 10 may send a CSI reporting MAC CE is configured to the first UE 10 by the radio network node 12 via dedicated RRC signaling or DCI. In an example, the radio network node 12 may signal the first UE 10 of the SL carrier in the same DCI carrying the SL grant. **Option 2:** the first UE 10 may select the SL carrier with lowest congestion among all SL carriers. The congestion is measured in terms of metrics including such as channel busy ratio, channel usage ratio, RSSI, etc. For each SL carrier, the measured CBR or CR of the resource pools associated with the SL carrier may be used to indicate congestion situation of the SL carrier. **Option 3:** the first UE 10 may select a SL carrier with the strongest radio channel quality among all SL carriers in terms of metrics such as Reference Signal Received Quality (RSRQ), RSRP, SINR, signal to interference ratio (SIR) etc. **Option 4:** the first UE 10 may select a specific SL carrier considering other conditions such as
- The SL carrier with lowest index among all SL carriers.
- The SL carrier with highest index among all SL carriers.
- The first UE 10 may select the SL carrier in a round robin fashion. In an example, last time, the first UE 10 may select the SL carrier 0 to transmit a CSI reporting MAC CE. Next time, the first UE 10 may select the SL carrier 1 to transmit another CSI reporting MAC CE, and so on.

**Option 5:** the first UE 10 may select a SL carrier among all SL carriers randomly.

**Action 405.** The first UE 10 transmits the message, such as the MAC CE, comprising the quality indication of the respective SL carrier of the one or more (or at least two) SL carriers, wherein the message further comprises the identifier or identifiers of the one or more (or at least two) SL carriers of which quality indication or indications are included in the message. Thus, the message may comprise an identifier for each SL carrier also referred to as carrier identifier. The message may be transmitted over the selected SL carrier. Hence, the first UE 10 transmits the message comprising an identifier identifying a SL, and a quality indication of said SL. The message may comprise a bitmap field containing multiple bits in a MAC CE, wherein a bit in the bitmap represents a specific SL carrier.

The identifier may be added into an existing SL CSI reporting MAC CE for indicating the associated SL carrier. The identifier may be added via one of the following options:
Option 1: the identifier may be carried via one or more existing R bits. In the existing MAC CE, there are 3 R bits. So the part or the full part of all R bits may be reused for indicating the identifier. Alternatively, a new field for indicating the identifier of the SL carrier may be added into the MAC CE.
Option 2: the identifier may be indicated using one or more fields in the MAC subheader for the MAC CE. Any field in the MAC subheader may be repurposed to indicate the identifier. Alternatively, a new field for indicating the identifier of the SL carrier may be added into the MAC subheader.

In this way, the first UE 10 may send a CSI reporting MAC CE for a SL carrier to a peer UE such as the second UE 13 using any SL activated carrier between the first UE 10 and the second UE 13. Upon reception of the MAC CE, the second UE 13 may identify the SL carrier which is associated with the CSI reporting MAC CE. This may be performed within the signalled latency bound. The first UE 10 may also be configured with a different CSI latency bound for a SL carrier. In this case, the first UE 10 may apply the minimum value between the configured different CSI latency bound and the received latency bound in the request message for the SL carrier. Alternatively, there is no latency bound in the request message. Instead, the first UE 10 is configured with a CSI latency bound which is applicable to any CSI report towards the second UE.

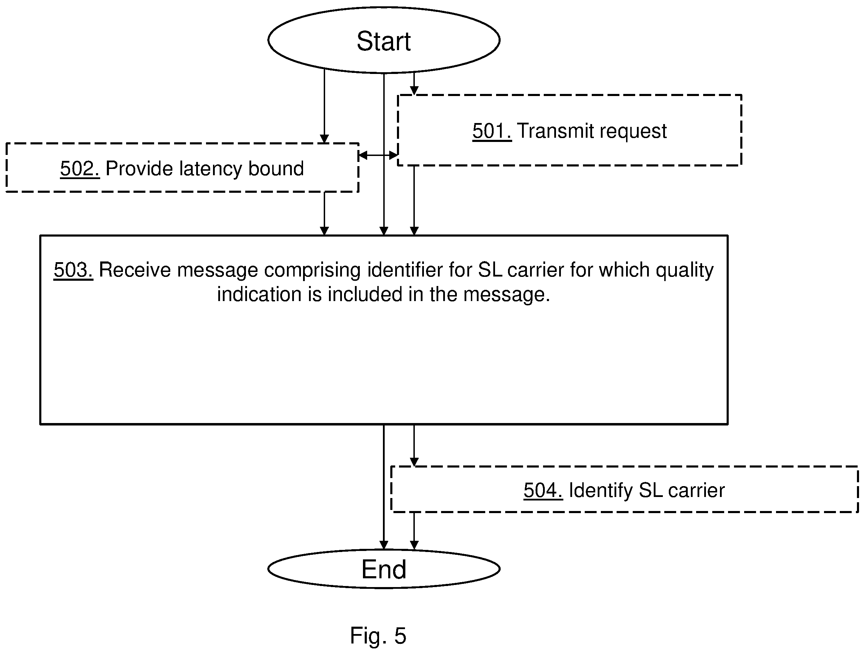

The method actions performed by the second UE 13 for handling communication over the SL between UEs communicating in the wireless communication network 1 according to embodiments of the present disclosure will now be described with reference to a flowchart depicted in **Fig. 5****.** The actions do not have to be taken in the order stated below, but may be taken in any suitable order. Actions performed in some embodiments are marked with dashed boxes.

**Action 501.** The second UE 13 may request, from the first UE 10, for one or more indications of the quality such as a CSI report of separate SL carriers. The request message may carry at least one identifier of one or multiple SL carriers for which the CSI information are requested. Alternatively, a bitmap field containing multiple bits may be defined in the MAC CE. Each bit represents a specific SL carrier. The bit with the value '1' indicates that CSI information of the associated SL carrier is requested, while, the bit with the value '0' indicates that CSI information of the associated SL carrier is not requested. The request message may comprise a bitmap field containing multiple bits in a MAC CE, wherein a bit in the bitmap represents a specific SL carrier. Furthermore, the second UE 13 may provide a latency bound of the requested CSI report. Within this latency bound, the first UE 10 needs to provide the CSI report to the second UE 13. There may be separate CSI report latency bound for each SL carrier respectively.

**Action 502.** The second UE 13 receives the message such as the MAC CE comprising the quality indication of the respective SL carrier of the one or more, or the at least two, SL carriers, wherein the message further comprises identifiers of the one or more, or the at least two, SL carriers of which quality indications are included in the message. Thus, the message may comprise an identifier for each SL carrier. The identifier may be added into an existing SL CSI reporting MAC CE for indicating the associated SL carrier. The identifier may be added via one of the following options:
Option 1: the identifier may be carried via one or more existing R bits. In the existing MAC CE, there are 3 R bits. So the part or the full part of all R bits may be reused for indicating the identifier. Alternatively, a new field for indicating the identifier of the SL carrier may be added into the MAC CE.
Option 2: the identifier may be indicated using one or more fields in the MAC subheader for the MAC CE. Any field in the MAC subheader may be repurposed to indicate the identifier. Alternatively, a new field for indicating the identifier of the SL carrier may be added into the MAC subheader.

In this way, the first UE 10 may send a CSI reporting MAC CE for a SL carrier to a peer UE such as the second UE 13 using any SL activated carrier between the first UE 10 and the second UE 13.

**Action 503.** The second UE 13, upon reception of the message, may identify the SL carrier based on the identifier. Thus, the second UE 13 may identify SL carrier which is associated with the CSI reporting MAC CE based on the received identifier. The second UE 13 may then use one or more carriers based on the received message for example in a CA scenario. For example, evaluate SLs to be used in CA.

**Fig. 6** is a block diagram depicting the first UE 10 for handling communication over the SL in the wireless communication network 1 according to embodiments herein.

The first UE 10 may comprise **processing circuitry 601,** e.g. one or more processors, configured to perform the methods herein.

The first UE 10 may comprise **a receiving unit 602,** such as a receiver or a transceiver. The first UE 10, the processing circuitry 601, and/or the receiving unit 602 may be configured to receive, from the second UE 13, a request for the one or more indications of the quality such as the CSI report for separate SL carriers. Furthermore, the first UE 10, the processing circuitry 601, and/or the receiving unit 602 may be configured to receive the latency bound of the requested CSI report. The first UE 10, the processing circuitry 601, and/or the receiving unit 602 may be configured to receive the request message from the second UE 13 for requesting CSI. The request message may carry at least one of the following information: identifiers of one or multiple SL carriers for which the CSI information are requested. Alternatively, a bitmap field containing multiple bits may be defined in the MAC CE. Each bit represents a specific SL carrier. The request message may comprise a bitmap field containing multiple bits in a MAC CE, wherein a bit in the bitmap represents a specific SL carrier.

The first UE 10 may comprise **an obtaining unit 603,** e.g. a receiver or a transceiver. The first UE 10, the processing circuitry 601, and/or the obtaining unit 603 may be configured to obtain quality information of multiple SLs. For example, the first UE 10, the processing circuitry 601, and/or the obtaining unit 603 may be configured to measure quality or receive CSI reports comprising values indicating quality of the separate SL carriers.

The first UE 10 may comprise **a selecting unit 604.** The first UE 10, the processing circuitry 601, and/or the selecting unit 604 may be configured to select SL carrier to transmit the message, such as a MAC CE or CSI reporting message. In case the UE 10 is configured with multiple SL carriers towards the second UE 13, when obtaining a SL grant, the first UE 10, the processing circuitry 601, and/or the selecting unit 604 may be configured to apply one of the following options to select a SL carrier to transmit the MAC CE to the second UE 13. **Option 1:** the SL carrier via which the first UE 10 may send a CSI reporting MAC CE is configured to the first UE 10 by the radio network node 12 via dedicated RRC signaling or DCI. In an example, the gNB may signal the first UE 10 of the SL carrier in the same DCI carrying the SL grant. **Option 2:** the first UE 10 may select the SL carrier with lowest congestion among all SL carriers. The congestion may be measured in terms of metrics including such as channel busy ratio, channel usage ratio, RSSI, etc. For each SL carrier, the measured CBR or CR of the resource pools associated with the SL carrier may be used to indicate congestion situation of the SL carrier. **Option 3:** the first UE 10 may select a SL carrier with strongest radio channel quality among all SL carriers in terms of metrics such as RSRQ, RSRP, SINR, signal to interference ratio SIR, etc. **Option 4:** the first UE 10 may select a specific SL carrier considering other conditions such as
- The SL carrier with lowest index among all SL carriers.
- The SL carrier with highest index among all SL carriers.
- The first UE 10 may select the SL carrier in a round robin fashion. In an example, last time, the first UE 10 may select the SL carrier 0 to transmit a CSI reporting MAC CE. Next time, the first UE 10 may select the SL carrier 1 to transmit another CSI reporting MAC CE, and so on.

**Option 5:** the first UE 10 may select a SL carrier among all SL carriers randomly.

The first UE 10 may comprise **a transmitting unit 605,** e.g. a transmitter or a transceiver. The first UE 10, the processing circuitry 601, and/or the transmitting unit 605 is configured to transmit the message such as the MAC CE comprising the quality indication of the respective SL carrier of the one or more, or the at least two, SL carriers, wherein the message further comprises identifiers of the one or more, or the at least two, SL carriers of which quality indications are included in the message. Thus, the message may comprise an identifier for each SL carrier. The message may be transmitted over the selected SL carrier. The message may comprise the bitmap field containing multiple bits in the MAC CE, wherein a bit in the bitmap represents a specific SL carrier.

The identifier may be added into an existing SL CSI reporting MAC CE for indicating the associated SL carrier. The identifier may be added via one of the following options:
Option 1: the identifier may be carried via one or more existing R bits. In the existing MAC CE, there are 3 R bits. So the part or the full part of all R bits may be reused for indicating the identifier. Alternatively, a new field for indicating the identifier of the SL carrier may be added into the MAC CE.
Option 2: the identifier may be indicated using one or more fields in the MAC subheader for the MAC CE. Any field in the MAC subheader may be repurposed to indicate the identifier. Alternatively, a new field for indicating the identifier of the SL carrier may be added into the MAC subheader.

In this way, the first UE 10 may send a CSI reporting MAC CE for a SL carrier to a peer UE such as the second UE 13 using any SL activated carrier between the UE and the second UE 13. Upon reception of the MAC CE, the second UE 13 may identify the SL carrier which is associated with the CSI reporting MAC CE.

This may be performed within the signaled latency bound. The first UE 10, the processing circuitry 601 and/or the transmitting unit 605 may be configured with a different CSI latency bound for a SL carrier. In this case, the first UE 10, the processing circuitry 601 and/or the transmitting unit 605 may be configured to apply the minimum value between the configured latency bound and the received latency bound in the request message for the SL carrier.

The first UE 10 further comprises **a memory 606.** The memory comprises one or more units to be used to store data on, such as indications, SL carriers, CSI information, requests, configuration, strengths or qualities, UL grants, indications, requests, commands, timers, applications to perform the methods disclosed herein when being executed, and similar. Thus, the first UE 10 may comprise the processing circuitry and the memory, said memory comprising instructions executable by said processing circuitry whereby said first UE 10 is operative to perform the methods herein. The first UE 10 comprises **a communication interface 609** comprising e.g. one or more antennas.

The methods according to the embodiments described herein for the first UE 10 are respectively implemented by means of e.g. **a computer program product 607** or a computer program, comprising instructions, i.e., software code portions, which, when executed on at least one processor, cause the at least one processor to carry out the actions described herein, as performed by the first UE 10. The computer program product 607 may be stored on **a computer-readable storage medium 608,** e.g. a universal serial bus (USB) stick, a disc, or similar. The computer-readable storage medium 608, having stored thereon the computer program product, may comprise the instructions which, when executed on at least one processor, cause the at least one processor to carry out the actions described herein, as performed by the first UE 10. In some embodiments, the computer-readable storage medium may be a non-transitory or a transitory computer-readable storage medium.

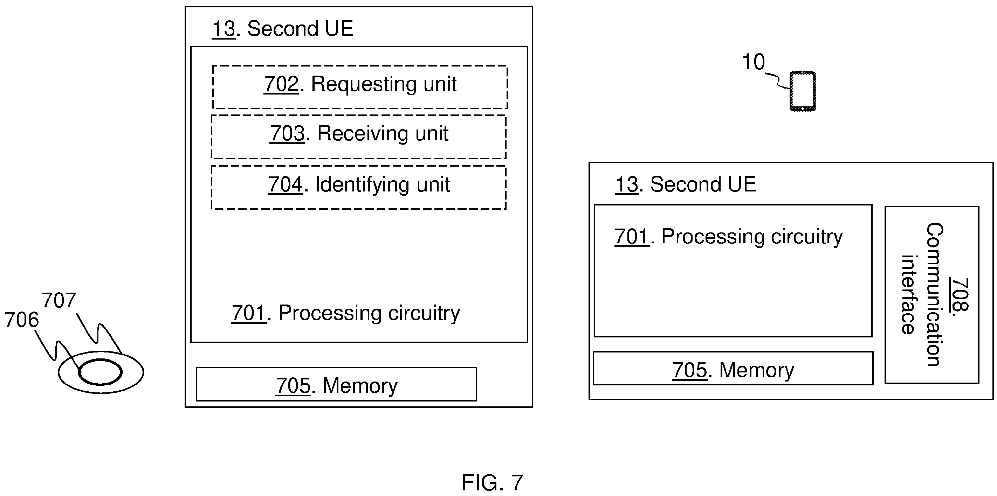

**Fig. 7** is a block diagram depicting the second UE 13, for handling communication over the SL in the wireless communication network 1, according to embodiments herein.

The second UE 13 may comprise **processing circuitry 701,** e.g. one or more processors, configured to perform the methods herein.

The second UE 13 may comprise **a requesting unit 702,** e.g. a transmitter or a transceiver. The second UE 13, the processing circuitry 701 and/or the requesting unit 702 may be configured to transmit the request for the indication of the quality such as a CSI report from the first UE 10. The second UE 13 may transmit the request message to the first UE 10 for requesting CSI. The request message may carry at least one identifier of one or multiple SL carriers for which the CSI information are requested. Alternatively, a bitmap field containing multiple bits may be defined in the MAC CE. Each bit represents a specific SL carrier. The bit with the value '1' indicates that CSI information of the associated SL carrier is requested, while, the bit with the value '0' indicates that CSI information of the associated SL carrier is not requested. The request message may comprise a bitmap field containing multiple bits in a MAC CE, wherein a bit in the bitmap represents a specific SL carrier. Furthermore, the second UE 13, the processing circuitry 701 and/or the requesting unit 702 may be configured to provide the latency bound of the requested CSI report. Within this latency bound, the first UE 10 needs to provide the CSI report to the second UE 13. There may be separate CSI report latency bound for each SL carrier respectively.

The second UE 13 may comprise **a receiving unit 703,** e.g., a receiver or a transceiver. The second UE 13, the processing circuitry 701 and/or the receiving unit 703 is configured to receive the message comprising the quality indication of the respective SL carrier of the one or more, or the at least two, SL carriers, wherein the message further comprises identifiers of the one or more, or the at least two, SL carriers of which quality indications are included in the message. Thus, the message may comprise an identifier for each SL carrier. The identifier may be added into an existing SL CSI reporting MAC CE for indicating the associated SL carrier. The identifier may be added via one of the following options:
Option 1: the identifier may be carried via one or more existing R bits. In the existing MAC CE, there are 3 R bits. So, the part or the full part of all R bits may be reused for indicating the identifier of the carrier. Alternatively, a new field for indicating the identifier of the SL carrier may be added into the MAC CE.
Option 2: the identifier may be indicated using one or more fields in the MAC subheader for the MAC CE. Any field in the MAC subheader may be repurposed to indicate the identifier. Alternatively, a new field for indicating the identifier of the SL carrier may be added into the MAC subheader.

In this way, the first UE 10 may send a CSI reporting MAC CE for a SL carrier to a peer UE such as the second UE 13 using any SL activated carrier between the UE and the second UE 13.

The second UE 13 may comprise **an identifying unit 704.** The second UE 13, the processing circuitry 701 and/or the identifying unit 704 may be configured to, upon reception of the message, identify the SL carrier based on the identifier. Thus, the second UE 13, the processing circuitry 701 and/or the identifying unit 704 may be configured to identify the SL carrier which is associated with the CSI reporting MAC CE based on the received identifier.

The second UE 13 further comprises **a memory 705.** The memory comprises one or more units to be used to store data on, such as indications, CSI information, SL carrier information, configurations, strengths or qualities, grants, scheduling information, timers, applications to perform the methods disclosed herein when being executed, and similar. The second UE 13 comprises **a communication interface 708** comprising, e.g., transmitter, receiver, transceiver and/or one or more antennas.

The methods according to the embodiments described herein for the second UE 13 are respectively implemented by means of, e.g., **a computer program product 706** or a computer program product, comprising instructions, i.e., software code portions, which, when executed on at least one processor, cause the at least one processor to carry out the actions described herein, as performed by the second UE 13. The computer program product 706 may be stored on **a computer-readable storage medium 707,** e.g., a USB stick, a disc or similar. The computer-readable storage medium 707, having stored thereon the computer program product, may comprise the instructions which, when executed on at least one processor, cause the at least one processor to carry out the actions described herein, as performed by the second UE 13. In some embodiments, the computer-readable storage medium may be a non-transitory or transitory computer-readable storage medium.

In some embodiments a more general term "radio network node" is used and it can correspond to any type of radio network node or any network node, which communicates with a wireless device and/or with another network node. Examples of network nodes are NodeB, Master eNB, Secondary eNB, a network node belonging to Master cell group (MCG) or Secondary Cell Group (SCG), base station (BS), multistandard radio (MSR) radio node such as MSR BS, eNodeB, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node e.g. Mobility Switching Centre (MSC), Mobile Management Entity (MME) etc., Operation and Maintenance (O&M), Operation Support System (OSS), Self-Organizing Network (SON), positioning node e.g. Evolved Serving Mobile Location Centre (E-SMLC), Minimizing Drive Test (MDT), etc.

In some embodiments, the non-limiting term wireless device or user equipment (UE) is used and it refers to any type of wireless device communicating with a network node and/or with another UE in a cellular or mobile communication system. Examples of UE are target device, device-to-device (D2D) UE, proximity capable UE (aka ProSe UE), machine type UE or UE capable of machine to machine (M2M) communication, PDA, PAD, Tablet, mobile terminals, smart phone, laptop embedded equipped (LEE), laptop mounted equipment (LME), USB dongles etc.

The embodiments are described for 5G. However the embodiments are applicable to any RAT or multi-RAT systems, where the UE receives and/or transmit signals (e.g. data) e.g. LTE, LTE FDD/TDD, WCDMA/HSPA, GSM/GERAN, Wi Fi, WLAN, CDMA2000 etc.

As will be readily understood by those familiar with communications design, functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance trade-offs inherent in these design choices.

Embodiment 1. A method performed by a first UE for handling communication over a sidelink in a wireless communication network. The method comprising:
transmitting, to a second UE, a message comprising a quality indication of a respective sidelink carrier of one or more SL carriers (out of two or more configured SL carriers), wherein the message further comprises a respective identifier of the one or more SL carriers of which quality indication is included in the message.

Embodiment 2. The method according to embodiment 1, further comprising receiving a request, from the second UE, requesting one or more indications of the quality of one or more SL carriers.

Embodiment 3. The method according to any of the embodiments 1-2, further comprising obtaining a latency bound of the requested one or more indications.

Embodiment 4. The method according to any of the embodiments 1-3, further comprising obtaining quality information of multiple sidelinks.

Embodiment 5. The method according to any of the embodiments 1-4, further comprising selecting SL carrier to transmit the message.

Embodiment 6. The method according to any of the embodiments 1-5, wherein the respective identifier is added in the message as one or more of the following:
the identifier is carried via one or more existing reserved bits;
the identifier is carried in a new field for indicating the identifier of the SL carrier;
the identifier is indicated using one or more fields in a medium access control, MAC, subheader for a MAC control element.

Embodiment 7. A method performed by a second UE for handling communication over a sidelink in a wireless communication network. The method comprising:
receiving, from a first UE, a message comprising a quality indication of a respective sidelink carrier of one or more SL carriers (out of two or more configured SL carriers), wherein the message further comprises a respective identifier of the one or more SL carriers of which quality indication is included in the message.

Embodiment 8. The method according to embodiment 7, further comprising transmitting a request, to the first UE, requesting one or more indications of the quality of one or more SL carriers.

Embodiment 9. The method according to any of the embodiments 7-8, further comprising providing a latency bound of the requested one or more indications.

Embodiment 10. The method according to any of the embodiments 7-9, further comprising identifying a SL carrier based on the identifier.

Embodiment 11. The method according to any of the embodiments 7-10, wherein the respective identifier in the message is one or more of the following:
the identifier is carried via one or more existing reserved bits;
the identifier is carried in a new field for indicating the identifier of the SL carrier;
the identifier is indicated using one or more fields in a medium access control, MAC, subheader for a MAC control element.

Embodiment 12. A first UE for handling communication over a sidelink in a wireless communication network. The first UE is configured to
transmit, to a second UE, a message comprising a quality indication of a respective sidelink carrier of one or more SL carriers (out of two or more configured SL carriers), wherein the message further comprises a respective identifier of the one or more SL carriers of which quality indication is included in the message.

Embodiment 13. The first UE according to embodiment 12, wherein the first UE is configured to receive a request, from the second UE, requesting one or more indications of the quality of one or more SL carriers.

Embodiment 14. The first UE according to embodiment 13, wherein the first UE is configured to obtain a latency bound of the requested one or more indications.

Embodiment 15. The first UE according to any of the embodiments 12-14, wherein the first UE is configured to obtain quality information of multiple sidelinks.

Embodiment 16. The first UE according to any of the embodiments 12-15, wherein the first UE is configured to select SL carrier to transmit the message.

Embodiment 17. The first UE according to any of the embodiments 12-16, wherein the respective identifier is added in the message as one or more of the following:
the identifier is carried via one or more existing reserved bits;
the identifier is carried in a new field for indicating the identifier of the SL carrier;
the identifier is indicated using one or more fields in a medium access control, MAC, subheader for a MAC control element.

Embodiment 18. A second UE for handling communication over a sidelink in a wireless communication network. The second UE is configured to:
receive, from a first UE, a message comprising a quality indication of a respective sidelink carrier of one or more SL carriers (out of two or more configured SL carriers), wherein the message further comprises a respective identifier of the one or more SL carriers of which quality indication is included in the message.

Embodiment 19. The second UE according to embodiment 18, wherein the second UE is configured to transmit a request, to the first UE, requesting one or more indications of the quality of one or more SL carriers.

Embodiment 20. The second UE according to embodiments 19, wherein the UE is configured to provide a latency bound of the requested one or more indications.

Embodiment 21. The second UE according to any of the embodiments 18-20, wherein the second UE is configured to identify a SL carrier based on the identifier.

Embodiment 22. The second UE according to any of the embodiments 18-21, wherein the respective identifier in the message is one or more of the following:
the identifier is carried via one or more existing reserved bits;
the identifier is carried in a new field for indicating the identifier of the SL carrier;
the identifier is indicated using one or more fields in a medium access control, MAC, subheader for a MAC control element

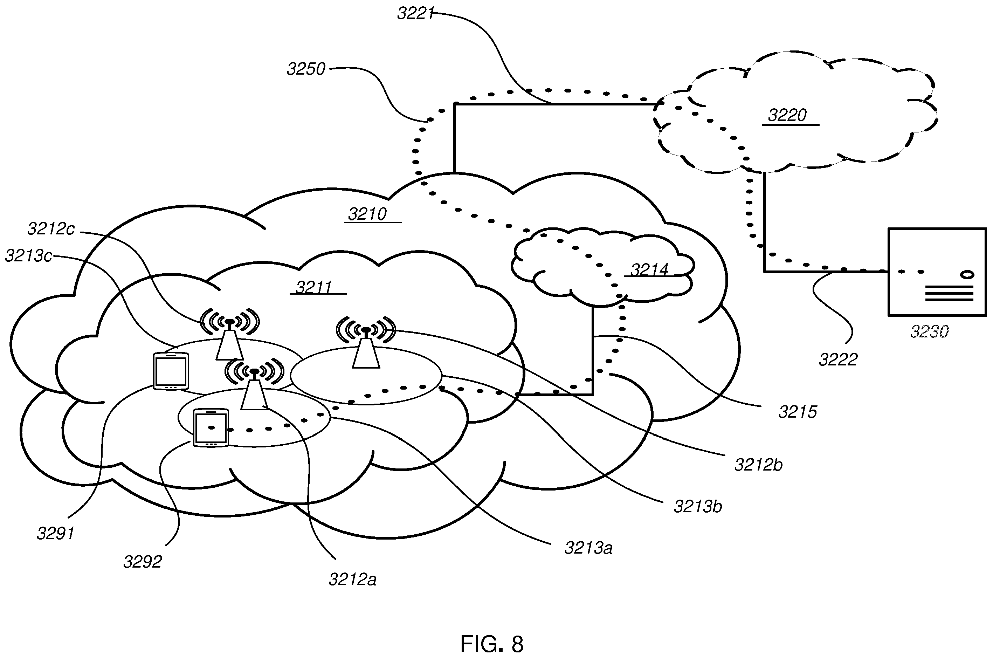

With reference to **Fig 8****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the UE 10 and relay UE 13, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Fig. 8 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

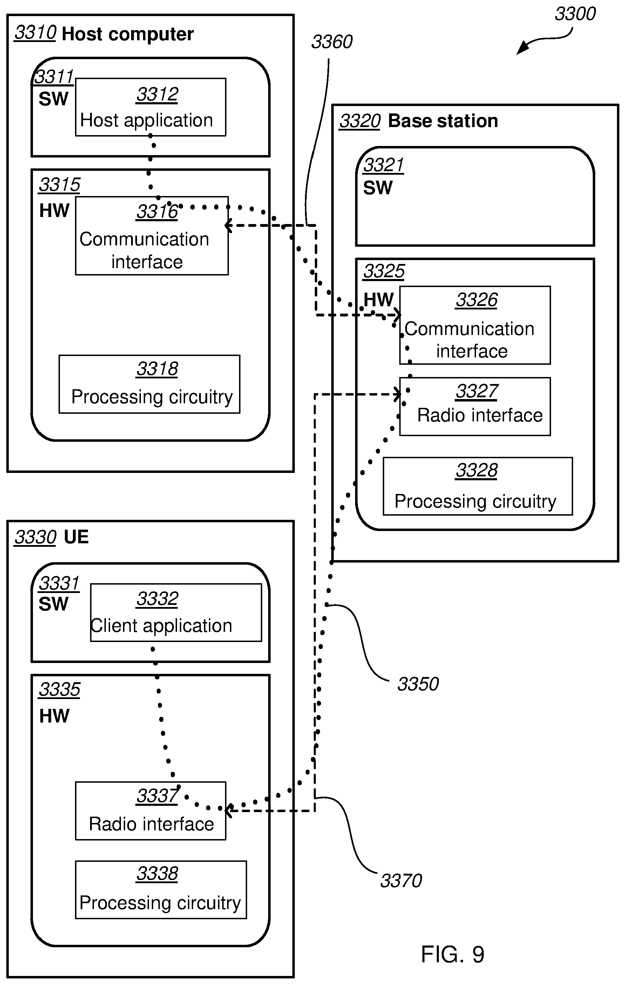

Example implementations, in accordance with an embodiment, of the UE, base station and host computer discussed in the preceding paragraphs will now be described with reference to **Fig. 9****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig.9) served by the base station 3320. The communication interface 3326 may be configured to facilitate a connection 3360 to the host computer 3310. The connection 3360 may be direct or it may pass through a core network (not shown in Fig.9) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig. 9 may be identical to the host computer 3230, one of the base stations 3212a, 3212b, 3212c and one of the UEs 3291, 3292 of Fig. 8, respectively. This is to say, the inner workings of these entities may be as shown in Fig. 9 and independently, the surrounding network topology may be that of Fig. 8.

In Fig. 9, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the performance since SLs of CA are handled more efficiently and thereby provide benefits such as reduced user waiting time, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

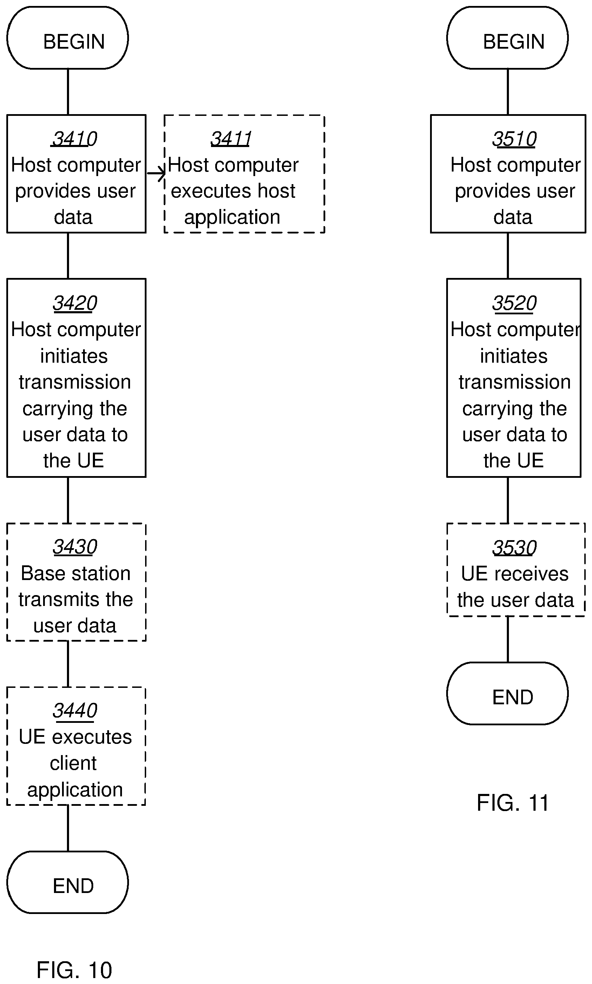

**Fig. 10** is a flowchart illustrating a method implemented in a communication system, in accordance with one embodiment. The communication system includes a host computer, a base station and a UE which may be those described with reference to Figs. 8 and 9. For simplicity of the present disclosure, only drawing references to Fig. 10 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 11** is a flowchart illustrating a method implemented in a communication system, in accordance with one embodiment. The communication system includes a host computer, a base station and a UE which may be those described with reference to Figs. 8 and 9. For simplicity of the present disclosure, only drawing references to Fig. 11 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

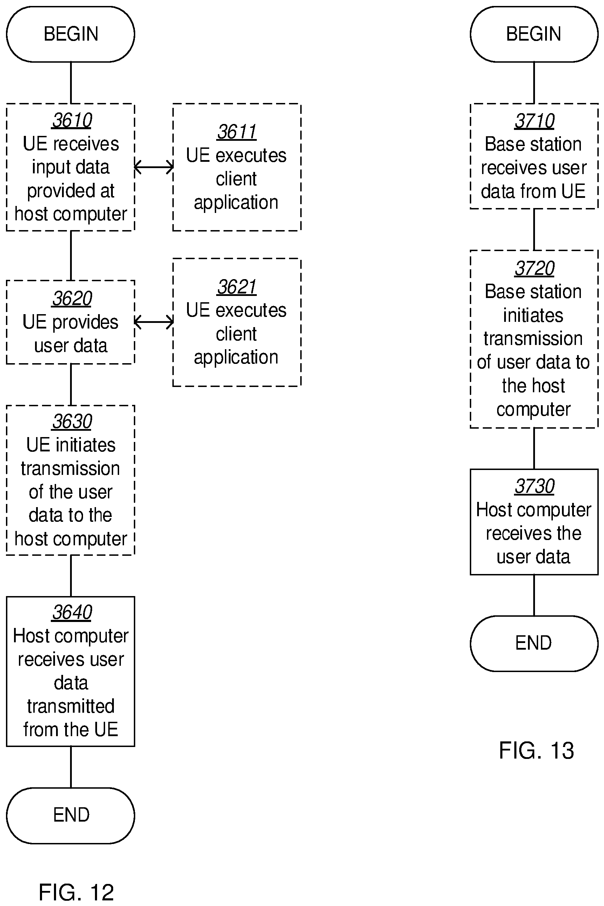

**Fig. 12** is a flowchart illustrating a method implemented in a communication system, in accordance with one embodiment. The communication system includes a host computer, a base station and a UE which may be those described with reference to Figs. 8 and 9. For simplicity of the present disclosure, only drawing references to Fig. 12 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 13** is a flowchart illustrating a method implemented in a communication system, in accordance with one embodiment. The communication system includes a host computer, a base station and a UE which may be those described with reference to Figs. 8 and 9. For simplicity of the present disclosure, only drawing references to Fig. 13 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

### ABBREVIATIONS

- 5G: Fifth Generation
- ACK: Acknowledgment
- AMF: Access and Mobility Management Function
- BWP: Bandwidth Part
- CE: Control element
- CP: Cyclic Prefix
- CSI-RS: Channel State Information Reference Signal
- DCI: Downlink Control Information
- DFN: Direct Frame Number
- DMRS: Demodulation Reference Signal
- gNB: gNodeB
- HARQ: Hybrid Automatic Repeat Request
- IE: Information Element
- LTE: Long Term Evolution
- MAC: Media Access Control
- MCS: Modulation and Coding Scheme
- NACK: Negative Acknowledgement
- NDI: New Data Indicator
- NR: New Radio
- OFDM: Orthogonal Frequency-Division Multiplexing
- PDCCH: Physical Downlink Control Channel
- PDCP: Packet Data Convergence Protocol
- PDSCH: Physical Downlink Shared Channel
- ProSe: Proximity-based Services
- PSBCH: Physical Sidelink Broadcast Channel
- PSCCH: Physical Sidelink Common Control Channel
- PSFCH: Physical Sidelink Feedback Channel
- PT-RS: Tracking Reference Signal
- PUCCH: Physical Uplink Control Channel
- PUSCH: Physical Uplink Shared Channel
- QoS: Quality of Service
- RAN: Radio Access Network
- RB: Resource Block
- RLC: Radio Link Control
- RLF: Radio Link Failure
- RLM: Radio Link Monitoring
- RNTI: Radio Network Temporary Identifier
- RRC: Radio Resource Control
- RRC: Radio Resource Control
- RSRP: Reference Signal Received Power
- RSRQ: Reference Signal Received Quality
- RSSI: Received Signal Strength Indicator
- RV: Redundancy Version
- SCI: Sidelink Control Information
- SCS: Sub-Carrier Spacing
- SI: System Information
- SL: SideLink
- SMF: Session Management Function
- S-PSS: Sidelink Primary Synchronization Signal
- SSB: Synchronization Signal Block
- SSID: Sidelink Synchronization Identity
- S-SSS: Sidelink Secondary Synchronization Signal
- UCI: Uplink Control Information
- UE: User Equipment
- UPF: User Plane Function

## Claims

1. A method performed by a first user equipment, UE, (10) for handling communication over a sidelink, SL, in a wireless communication network (1), the method comprising:
- receiving (401) a request message, from a second UE (13), carrying a respective identifier for multiple SL carriers for which channel state information, CSI, is requested;
- obtaining (403) quality information of the multiple SL carriers;
- selecting (404) a SL carrier to transmit a channel state information reporting medium access control, MAC, control element, CE, on; and
- transmitting (405), to the second UE (13), the channel state information reporting MAC CE comprising a quality indication of a respective SL carrier of two or more configured SL carriers of the multiple SL carriers, wherein the channel state information reporting MAC CE further comprises a respective identifier of the two or more configured SL carriers of which the respective quality indication is included in the channel state information reporting MAC CE.

2. The method according to claim 1, further comprising
- obtaining (402) a latency bound of the requested one or more indications.

3. The method according to any of the claims 1-2, wherein the respective identifier is added in the message as one or more of the following:
the identifier is carried via one or more existing reserved bits;
the identifier is carried in a new field for indicating the identifier of the SL carrier;
the identifier is indicated using one or more fields in a MAC subheader for a MAC CE.

4. The method according to any of the claims 1-3, wherein the message comprises a bitmap field containing multiple bits in a MAC CE, wherein a bit in the bitmap represents a specific SL carrier.

5. A method performed by a second user equipment, UE, (13) for handling communication over a sidelink, SL, in a wireless communication network (1), the method comprising:
- transmitting (501) a request message, to a first UE (10), carrying a respective identifier for multiple SL carriers for which channel state information, CSI, is requested; and
- receiving (503), from the first UE (10), a channel state information reporting medium access control, MAC, control element, CE, comprising a quality indication of a respective SL carrier of two or more configured SL carriers of the multiple SL carriers, wherein the channel state information reporting MAC CE further comprises a respective identifier of the two or more configured SL carriers of which respective quality indication is included in the channel state information reporting MAC CE.

6. The method according to claim 5, further comprising
- providing (502) a latency bound of the requested one or more indications.

7. The method according to any of the claims 5-6, further comprising
- identifying (504) a SL carrier based on the identifier.

8. The method according to any of the claims 5-7, wherein the respective identifier in the message is one or more of the following:
the identifier is carried via one or more existing reserved bits;
the identifier is carried in a new field for indicating the identifier of the SL carrier;
the identifier is indicated using one or more fields in a MAC subheader for a MAC CE.

9. The method according to any of the claims 5-8, wherein the request message comprises a bitmap field containing multiple bits in the MAC CE, wherein a bit in the bitmap represents a specific SL carrier.

10. A first user equipment, UE, (10) for handling communication over a sidelink, SL, in a wireless communication network (1), wherein the first UE (10) is configured to:
receive a request message, from a second UE (13), carrying a respective identifier for multiple SL carriers for which channel state information, CSI, is requested;
obtain quality information of the multiple SL carriers;
select a SL carrier to transmit a channel state information reporting medium access control, MAC, control element, CE, on; and
transmit, to the second UE (13), the channel state information reporting MAC CE comprising a quality indication of a respective sidelink carrier of two or more configured SL carriers of the multiple SL carriers, wherein the channel state information reporting MAC CE further comprises a respective identifier of the two or more configured SL carriers of which the respective quality indication is included in the channel state information reporting MAC CE.

11. The first UE (10) according to claim 10, wherein the first UE (10) is configured to perform the method according to any of the claims 2-4.

12. A second user equipment, UE, (13) for handling communication over a sidelink, SL, in a wireless communication network (1), wherein the second UE (13) is configured to:
transmit a request message, to a first UE (10), carrying a respective identifier for multiple SL carriers for which channel state information, CSI, is requested; and
receive, from the first UE (10), a channel state information reporting medium access control, MAC, control element, CE, comprising a quality indication of a respective sidelink carrier of two or more configured SL carriers of the multiple SL carriers, wherein the channel state information reporting MAC CE further comprises a respective identifier of the two or more configured SL carriers of which respective quality indication is included in the channel state information reporting MAC CE.

13. The second UE (13) according to claim 12, wherein the second UE (13) is configured to perform the method according to any of the claims 6-9.

## Patentansprüche

1. Verfahren, das von einer ersten Benutzereinrichtung, UE, (10) durchgeführt wird, zur Handhabung von Kommunikation über einen Sidelink, SL, in einem drahtlosen Kommunikationsnetzwerk (1), wobei das Verfahren Folgendes umfasst:
- Empfangen (401) einer Anforderungsnachricht, die eine jeweilige Kennung für mehrere SL-Träger überträgt, für die Kanalzustandsinformationen, CSI, angefordert werden, von einer zweiten UE (13);
- Abrufen (403) von Qualitätsinformationen der mehreren SL-Träger;
- Auswählen (404) eines SL-Trägers, um ein Medium Access Control-Steuerelement, MAC-CE, zur Meldung der Kanalzustandsinformationen darauf zu senden; und
- Senden (405) des Kanalzustandsinformationsmeldungs-MAC-CE, das eine Qualitätsangabe eines jeweiligen SL-Trägers aus zwei oder mehr konfigurierten SL-Trägern der mehreren SL-Träger umfasst, an die zweite UE (13), wobei das Kanalzustandsinformationsmeldungs-MAC-CE ferner eine jeweilige Kennung der zwei oder mehr konfigurierten SL-Träger umfasst, von denen die jeweilige Qualitätsangabe in dem Kanalzustandsinformationsmeldungs-MAC-CE umfasst ist.

2. Verfahren nach Anspruch 1, ferner umfassend:
- Abrufen (402) einer Latenzgrenze der einen oder der mehreren angeforderten Angaben.

3. Verfahren nach einem der Ansprüche 1-2, wobei die jeweilige Kennung in der Nachricht als eine oder mehrere von folgenden hinzugefügt wird:
die Kennung wird über ein oder mehrere bestehende reservierte Bits übertragen;
die Kennung wird in einem neuen Feld zum Angeben der Kennung des SL-Trägers übertragen;
die Kennung wird unter Verwendung eines oder mehrerer Felder in einem MAC-Subheader für ein MAC-CE angegeben.

4. Verfahren nach einem der Ansprüche 1-3, wobei die Nachricht ein Bitmap-Feld, das mehrere Bits enthält, in einem MAC-CE umfasst, wobei ein Bit in der Bitmap einen spezifischen SL-Träger darstellt.

5. Verfahren, das von einer zweiten Benutzereinrichtung, UE, (13) durchgeführt wird, zur Handhabung von Kommunikation über einen Sidelink, SL, in einem drahtlosen Kommunikationsnetzwerk (1), wobei das Verfahren Folgendes umfasst:
- Senden (501) einer Anforderungsnachricht, die eine jeweilige Kennung für mehrere SL-Träger überträgt, für die Kanalzustandsinformationen, CSI, angefordert werden, an eine erste UE (10); und
- Empfangen (503) eines Medium Access Control-Steuerelements, MAC-CE, zur Meldung der Kanalzustandsinformationen, das eine Qualitätsangabe eines jeweiligen SL-Trägers aus zwei oder mehr konfigurierten SL-Trägern der mehreren SL-Träger umfasst, von der ersten UE (10), wobei das Kanalzustandsinformationsmeldungs-MAC-CE ferner eine jeweilige Kennung der zwei oder mehr konfigurierten SL-Träger umfasst, von denen die jeweilige Qualitätsangabe in dem Kanalzustandsinformationsmeldungs-MAC-CE umfasst ist.

6. Verfahren nach Anspruch 5, ferner umfassend:
- Bereitstellen (502) einer Latenzgrenze der einen oder der mehreren angeforderten Angaben.

7. Verfahren nach einem der Ansprüche 5-6, ferner umfassend
- Identifizieren (504) eines SL-Trägers basierend auf der Kennung.

8. Verfahren nach einem der Ansprüche 5-7, wobei die jeweilige Kennung in der Nachricht eine oder mehrere von folgenden ist:
die Kennung wird über ein oder mehrere bestehende reservierte Bits übertragen;
die Kennung wird in einem neuen Feld zum Angeben der Kennung des SL-Trägers übertragen;
die Kennung wird unter Verwendung eines oder mehrerer Felder in einem MAC-Subheader für ein MAC-CE angegeben.

9. Verfahren nach einem der Ansprüche 5-8, wobei die Anforderungsnachricht ein Bitmap-Feld, das mehrere Bits enthält, in dem MAC-CE umfasst, wobei ein Bit in der Bitmap einen spezifischen SL-Träger darstellt.

10. Erste Benutzereinrichtung, UE, (10) zum Handhaben von Kommunikation über einen Sidelink, SL, in einem drahtlosen Kommunikationsnetzwerk (1), wobei die erste UE (10) zu Folgendem konfiguriert ist:
Empfangen (401) einer Anforderungsnachricht, die eine jeweilige Kennung für mehrere SL-Träger überträgt, für die Kanalzustandsinformationen, CSI, angefordert werden, von einer zweiten UE (13);
Abrufen von Qualitätsinformationen der mehreren SL-Träger;
Auswählen eines SL-Trägers, um ein Medium Access Control-Steuerelement, MAC-CE, zur Meldung der Kanalzustandsinformationen darauf zu senden; und
Senden des Kanalzustandsinformationsmeldungs-MAC-CE, das eine Qualitätsangabe eines jeweiligen Sidelink-Trägers aus zwei oder mehr konfigurierten SL-Trägern der mehreren SL-Träger umfasst, an die zweite UE (13), wobei das Kanalzustandsinformationsmeldungs-MAC-CE ferner eine jeweilige Kennung der zwei oder mehr konfigurierten SL-Träger umfasst, von denen die jeweilige Qualitätsangabe in dem Kanalzustandsinformationsmeldungs-MAC-CE umfasst ist.

11. Erste UE (10) nach Anspruch 10, wobei die erste UE (10) zum Durchführen des Verfahrens nach einem der Ansprüche 2-4 konfiguriert ist.

12. Zweite Benutzereinrichtung, UE, (13) zum Handhaben von Kommunikation über einen Sidelink, SL, in einem drahtlosen Kommunikationsnetzwerk (1), wobei die zweite UE (13) zu Folgendem konfiguriert ist:
Senden einer Anforderungsnachricht, die eine jeweilige Kennung für mehrere SL-Träger überträgt, für die Kanalzustandsinformationen, CSI, angefordert werden, an eine erste UE (10); und
Empfangen eines Medium Access Control-Steuerelements, MAC-CE, zur Meldung der Kanalzustandsinformationen, das eine Qualitätsangabe eines jeweiligen Sidelink-Trägers aus zwei oder mehr konfigurierten SL-Trägern der mehreren SL-Träger umfasst, von der ersten UE (10), wobei das Kanalzustandsinformationsmeldungs-MAC-CE ferner eine jeweilige Kennung der zwei oder mehr konfigurierten SL-Träger umfasst, von denen die jeweilige Qualitätsangabe in dem Kanalzustandsinformationsmeldungs-MAC-CE umfasst ist.

13. Zweite UE (13) nach Anspruch 12, wobei die zweite UE (13) zum Durchführen des Verfahrens nach einem der Ansprüche 6-9 konfiguriert ist.

## Revendications

1. Procédé réalisé par un premier équipement utilisateur, UE, (10) pour gérer une communication sur une liaison latérale, SL, dans un réseau de communication sans fil (1), le procédé comprenant :
- la réception (401) d'un message de demande, depuis un deuxième UE (13), portant un identifiant respectif de multiples porteuses SL pour lesquelles des informations d'état de canal, CSI, sont demandées ;
- l'obtention (403) d'informations de qualité des multiples porteuses SL ;
- la sélection (404) d'une porteuse SL sur laquelle transmettre des informations d'état de canal signalant un élément de commande, CE, de commande d'accès au support, MAC ; et
- la transmission (405), au deuxième UE (13), des informations d'état de canal signalant un CE MAC comprenant une indication de qualité d'une porteuse SL respective de deux porteuses SL configurées ou plus parmi les multiples porteuses SL, dans lequel les informations d'état de canal signalant un CE MAC comprennent en outre un identifiant respectif des deux porteuses SL configurées ou plus desquelles l'indication de qualité respective est incluse dans les informations d'état de canal signalant un CE MAC.

2. Procédé selon la revendication 1, comprenant en outre :
- l'obtention (402) d'une limite de latence des une ou plusieurs indications demandées.

3. Procédé selon l'une quelconque des revendications 1 et 2, dans lequel l'identifiant respectif est ajouté au message en tant qu'un ou plusieurs parmi :
l'identifiant est porté via un ou plusieurs bits réservés existants ;
l'identifiant est porté dans un nouveau champ pour indiquer l'identifiant de la porteuse SL ;
l'identifiant est indiqué à l'aide d'un ou plusieurs champs dans un sous-en-tête MAC pour un CE MAC.

4. Procédé selon l'une quelconque des revendications 1 à 3, dans lequel le message comprend un champ de bitmap contenant de multiples bits dans un CE MAC, dans lequel un bit dans le bitmap représente une porteuse SL spécifique.

5. Procédé réalisé par un deuxième équipement utilisateur, UE, (13) pour gérer une communication sur une liaison latérale, SL, dans un réseau de communication sans fil (1), le procédé comprenant :
- la transmission (501) d'un message de demande, à un premier UE (10), portant un identifiant respectif de multiples porteuses SL pour lesquelles des informations d'état de canal, CSI, sont demandées ; et
- la réception (503), depuis le premier UE (10), d'informations d'état de canal signalant un élément de commande, CE, de commande d'accès au support, MAC, comprenant une indication de qualité d'une porteuse SL respective de deux porteuses SL configurées ou plus parmi les multiples porteuses SL, dans lequel les informations d'état de canal signalant un CE MAC comprennent en outre un identifiant respectif des deux porteuses SL configurées ou plus desquelles l'indication de qualité respective est incluse dans les informations d'état de canal signalant un CE MAC.

6. Procédé selon la revendication 5, comprenant en outre :
- la fourniture (502) d'une limite de latence des une ou plusieurs indications demandées.

7. Procédé selon l'une quelconque des revendications 5 et 6, comprenant en outre :
l'identification (504) d'une porteuse SL sur la base de l'identifiant.

8. Procédé selon l'une quelconque des revendications 5 à 7, dans lequel l'identifiant respectif dans le message est un ou plusieurs parmi :
l'identifiant est porté via un ou plusieurs bits réservés existants ;
l'identifiant est porté dans un nouveau champ pour indiquer l'identifiant de la porteuse SL ;
l'identifiant est indiqué à l'aide d'un ou plusieurs champs dans un sous-en-tête MAC pour un CE MAC.

9. Procédé selon l'une quelconque des revendications 5 à 8, dans lequel le message de demande comprend un champ de bitmap contenant de multiples bits dans le CE MAC, dans lequel un bit dans le bitmap représente une porteuse SL spécifique.

10. Premier équipement utilisateur, UE, (10) pour gérer une communication sur une liaison latérale, SL, dans un réseau de communication sans fil (1), dans lequel le premier UE (10) est configuré pour :
recevoir (401) un message de demande, depuis un deuxième UE (13), portant un identifiant respectif de multiples porteuses SL pour lesquelles des informations d'état de canal, CSI, sont demandées ;
obtenir des informations de qualité des multiples porteuses SL ;
sélectionner une porteuse SL sur laquelle transmettre des informations d'état de canal signalant un élément de commande, CE, de commande d'accès au support, MAC ; et
transmettre, au deuxième UE (13), les informations d'état de canal signalant un CE MAC comprenant une indication de qualité d'une porteuse de liaison latérale respective de deux porteuses SL configurées ou plus parmi les multiples porteuses SL, dans lequel les informations d'état de canal signalant un CE MAC comprennent en outre un identifiant respectif des deux porteuses SL configurées ou plus desquelles l'indication de qualité respective est incluse dans les informations d'état de canal signalant un CE MAC.

11. Premier UE (10) selon la revendication 10, dans lequel le premier UE (10) est configuré pour réaliser le procédé selon l'une quelconque des revendications 2 à 4.

12. Deuxième équipement utilisateur, UE, (13) pour gérer une communication sur une liaison latérale, SL, dans un réseau de communication sans fil (1), dans lequel le deuxième UE (13) est configuré pour :
transmettre un message de demande, à un premier UE (10), portant un identifiant respectif de multiples porteuses SL pour lesquelles des informations d'état de canal, CSI, sont demandées ; et
recevoir, depuis le premier UE (10), des informations d'état de canal signalant un élément de commande, CE, de commande d'accès au support, MAC, comprenant une indication de qualité d'une porteuse de liaison latérale respective de deux porteuses SL configurées ou plus parmi les multiples porteuses SL, dans lequel les informations d'état de canal signalant un CE MAC comprennent en outre un identifiant respectif des deux porteuses SL configurées ou plus desquelles l'indication de qualité respective est incluse dans les informations d'état de canal signalant un CE MAC.

13. Deuxième UE (13) selon la revendication 12, dans lequel le deuxième UE (13) est configuré pour réaliser le procédé selon l'une quelconque des revendications 6 à 9.
